# FASCICULE DE BREVET EUROPEEN

(11) **EP 3 442 831 B1**
(45) Date de publication et mention de la délivrance du brevet: **14.12.2022**
(21) Numéro de dépôt: 17714849.1
(22) Date de dépôt: 09.03.2017
(51) Int. Cl.: B60R 13/08, D04H 1/542, B29C 43/20, B32B 5/18, B32B 5/22, B29B 17/00, B29C 44/08, B29C 44/12, B29K 105/04, B29K 105/12, B29K 105/26, B29L 31/30

(54) **PROCÉDÉ DE RÉALISATION D'UN PANNEAU INSONORISANT DE GARNISSAGE INTÉRIEUR DE VÉHICULE AUTOMOBILE**
VERFAHREN ZUR HERSTELLUNG EINES SCHALLDICHTEN INNENVERKLEIDUNGSPANEELS FÜR EIN KRAFTFAHRZEUG
METHOD FOR PRODUCING A SOUNDPROOFING TRIM PANEL FOR THE INTERIOR OF A MOTOR VEHICLE

(30) Priorité: 12.04.2016 FR 1653229; 01.07.2016 WO PCT/FR2016/051674
(43) Date de publication de la demande: 20.02.2019
(73) Titulaire: TREVES Products, Services & Innovation, 75008 Paris (FR)
(72) Inventeur: LEMAIRE, Dominique, 08190 Villiers devant le Thour (FR); CRIGNON, Guillaume, 51500 Sillery (FR); CAPRON, Christophe, 51490 Epoye (FR)
(74) Mandataire: Sayettat, Julien Christian
(86) Numéro de dépôt international: PCT/FR2017/050535
(87) Numéro de publication internationale: WO 2017/178717

(56) Documents cités:
- EP-A1- 1 847 383
- EP-A2- 2 053 593
- DE-B3-102006 005 369
- JP-A- H07 205 169
- JP-A- H08 282 402
- US-A1- 2013 009 087
- US-B1- 6 576 172

## Description

L'invention concerne un procédé de réalisation d'un panneau insonorisant de garnissage intérieur de véhicule automobile, un panneau obtenu par un tel procédé et un montage d'un tel panneau.

Il est connu de mettre en œuvre un procédé de réalisation d'un panneau insonorisant de garnissage intérieur de véhicule automobile, ledit procédé comprenant les étapes suivantes :
- prévoir une couche inférieure élastiquement compressible, ladite couche étant conformable à chaud de manière à pouvoir adopter une géométrie stable après conformation,
- chauffer ladite couche inférieure et la disposer dans un moule de manière à la conformer pour former couche de ressort d'un système d'isolation de type « masse-ressort »,
- lui associer une couche supérieure formant la masse dudit système « masse-ressort », ladite couche supérieure étant de nature étanche ou bien poreuse étant associée à une couche d'étanchéité disposée entre lesdites couches supérieure et inférieure.

Dans les réalisations connues, voir par exemple JP H08 282402 A, la couche inférieure est notamment à base de feutre pourvu d'un liant, qui présente une masse surfacique élevée, ce qui conduit à un panneau de poids important.

Or, dans l'optique de gain de masse des véhicules, il est important de descendre le poids des panneaux d'insonorisation.

Pour ce faire, on pourrait prévoir d'utiliser, pour la couche inférieure, un feutre de moindre densité.

Cependant, une telle façon de procéder risque de conduire à un feutre ne présentant pas les caractéristiques d'élasticité requises et/ou présentant lesdites caractéristiques mais au prix d'un surcoût notable, comme c'est par exemple le cas pour les feutres qui sont réalisés à base de microfibres coûteuses.

L'invention a pour but de proposer un procédé de réalisation d'un panneau présentant une couche inférieure de faible masse surfacique et de faible coût, ladite couche pouvant notamment être partiellement issue de recyclage.

A cet effet, et selon un premier aspect, l'invention propose un procédé de réalisation d'un panneau insonorisant de garnissage intérieur de véhicule automobile, ledit procédé comprenant les étapes suivantes :
- prévoir une couche inférieure élastiquement compressible, ladite couche étant conformable à chaud de manière à pouvoir adopter une géométrie stable après conformation,
- chauffer ladite couche et la disposer dans un moule de manière à la conformer pour former couche de ressort d'un système d'isolation de type « masse-ressort »,
- lui associer une couche supérieure formant la masse dudit système « masse-ressort », ladite couche supérieure étant de nature étanche ou bien poreuse associée à une couche d'étanchéité disposée entre lesdites couches supérieure et inférieure,
ledit procédé présentant en outre les caractéristiques suivantes :
- ladite couche inférieure est à base d'un mélange de flocons de mousse élastiquement compressible, lesdits flocons étant notamment issus de recyclage,
- lesdits flocons constituent au minimum 80% en poids de ladite couche inférieure,
- lesdits flocons sont mélangés à des fibres liantes, lesdites fibres comprenant une âme, ladite âme étant non fusible ou fusible à température élevée, et une gaine fusible à température modérée, lesdits flocons étant liés entre eux par fusion de ladite gaine formant liant, de sorte que ladite couche inférieure soit sous forme de mousse agglomérée.

Avec l'agencement proposé, on dispose d'un panneau dans lequel la couche inférieure peut présenter une faible masse surfacique, sous réserve de prévoir des flocons de densité suffisamment faible, ce qui permet un allègement dudit panneau par rapport aux réalisations connues.

Usuellement, une couche inférieure à base de mousse de faible densité, par exemple de l'ordre de 0,020 ne présente pas les caractéristiques attendues pour faire un bon ressort dans un système « masse-ressort ».

Pourtant, de façon surprenante, la demanderesse a observé qu'une couche inférieure telle que préconisée, même à de très faibles densités, présente une bonne efficacité en termes de ressort dans un tel système.

Selon d'autres aspects, l'invention propose un panneau obtenu par un tel procédé et un montage d'un tel panneau.

D'autres particularités et avantages de l'invention apparaîtront dans la description qui suit, faite en référence aux figures jointes, dans lesquelles :

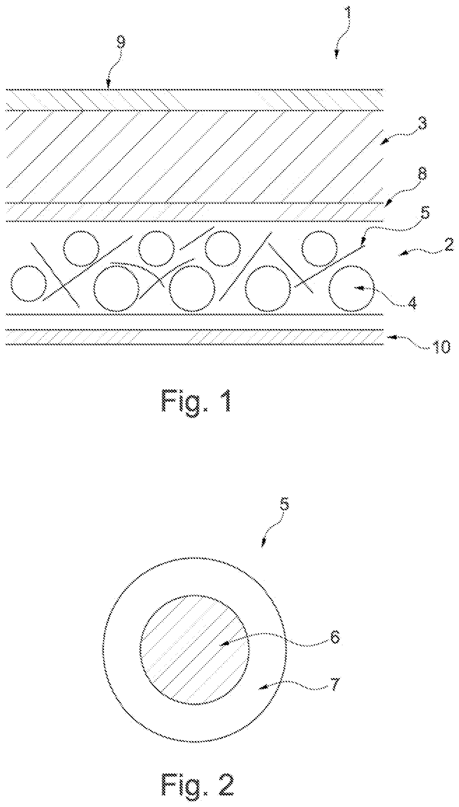

- la figure 1 est une vue schématique en coupe d'un panneau selon une réalisation monté dans un véhicule,
- la figure 2 est une vue schématique en coupe d'une fibre liante.

En référence aux figures, on décrit un procédé de réalisation d'un panneau 1 insonorisant de garnissage intérieur de véhicule automobile, ledit procédé comprenant les étapes suivantes :
- prévoir une couche inférieure 2 élastiquement compressible, ladite couche étant conformable à chaud de manière à pouvoir adopter une géométrie stable après conformation,
- chauffer ladite couche inférieure et la disposer dans un moule de manière à la conformer pour former couche de ressort d'un système d'isolation de type « masse-ressort »,
- lui associer une couche supérieure 3 formant la masse dudit système « masse-ressort », ladite couche supérieure étant de nature étanche ou bien poreuse associée à une couche d'étanchéité 8 disposée entre lesdites couches supérieure et inférieure,
ledit procédé présentant en outre les caractéristiques suivantes :
- ladite couche inférieure est à base d'un mélange de flocons 4 de mousse élastiquement compressible, lesdits flocons étant notamment issus de recyclage,
- lesdits flocons constituent au minimum 80% en poids de ladite couche inférieure,
- lesdits flocons sont mélangés à des fibres liantes 5, lesdites fibres comprenant une âme 6, ladite âme étant non fusible ou fusible à température élevée, et une gaine 7 fusible à température modérée, lesdits flocons étant liés entre eux par fusion de ladite gaine formant liant, de sorte que ladite couche inférieure soit sous forme de mousse agglomérée.

En particulier, la couche inférieure 2 est de masse surfacique sensiblement homogène.

Selon une réalisation, la couche inférieure 2 peut présenter après conformation une épaisseur pouvant varier de 40 mm, en partie non comprimée, à 5 mm, en partie fortement comprimée.

En particulier, on prévoit de comprimer la couche inférieure 2, par exemple en périphérie du panneau 1 ou en fonction de contraintes d'encombrement autour dudit panneau dans le véhicule.

L'association entre les couches supérieure 3 et inférieure 2 se fait notamment pendant l'étape de conformation de ladite couche inférieure, ladite couche supérieure étant disposée dans le moule en superposition sur ladite couche inférieure.

Selon une réalisation, la couche inférieure 2 présente avant sa conformation dans le moule une densité inférieure à 0,025, et notamment inférieure à 0,020. Selon une réalisation, la couche inférieure 2 présente avant sa conformation dans le moule une épaisseur inférieure à 50 mm, et notamment de l'ordre de 40 mm.

Selon une réalisation non revendiquée, la couche inférieure 2 peut être recouverte d'une couche de protection sur au moins une de ses faces, ladite couche permettant de faciliter la préchauffe avant conformation et aussi de protéger ladite couche inférieure lors de la manipulation du panneau 1, cette couche pouvant être de nature type « Spun » polyester de 20 à 30 g/m² ou non tissé.

On peut ainsi disposer d'une couche inférieure 2 de masse surfacique inférieure à 1000 g/m², et notamment inférieure ou égale à 700 g/m².

Selon une réalisation, les flocons 4 occupent entre 90 et 80% en poids de la couche inférieure 2, et notamment entre 87 et 83%, et notamment de l'ordre de 85% de sorte que les fibres 5 occupent entre 10 et 20% en poids de ladite couche, et notamment entre 13 et 17%, et notamment de l'ordre de 15%.

Selon une réalisation non revendiquée, l'âme 6 est à base de polyester et la gaine 7 à base de copolyester.

Selon une réalisation non revendiquée, les fibres ont un titre compris entre 1,7 et 6 dtex, et notamment de l'ordre de 4,4 dtex.

Selon une réalisation, les flocons 4 de la couche inférieure 2 sont à base polyuréthanne.

Selon une réalisation, la couche supérieure 3 présente une masse surfacique minimale de 700 g/m².

Selon la réalisation représentée, la couche supérieure 3 est poreuse et le procédé comprend en outre une étape de placement d'une couche d'étanchéité 8 entre ladite couche supérieure et la couche inférieure 2, ladite couche d'étanchéité étant notamment sous la forme d'un film thermoplastique ou de non tissé enduit étanche, notamment d'épaisseur inférieure à 200 microns, de sorte que le panneau 1 forme un système isolant, de type « masse-ressort », et absorbant de par la porosité de ladite couche supérieure.

Selon une réalisation, la couche supérieure 3 est, lorsqu'elle est poreuse, à base de flocons de mousse, notamment de polyuréthanne, liés entre eux par un liant, notamment sous la forme de fibres liantes telles que précédemment décrites.

Selon une autre réalisation, la couche supérieure 3 est, lorsqu'elle est poreuse, à base de fibres, liés entre elles par un liant, notamment sous la forme de fibres liantes telles que précédemment décrites.

Selon une réalisation, la couche supérieure 3, lorsqu'elle est poreuse, peut être chargée de particules denses, par exemple à base d'élastomère thermoplastique chargé avec une charge minérale.

Selon une réalisation non représentée, la couche supérieure 3 est étanche, étant notamment à base d'élastomère thermoplastique - notamment d'éthylène propylène diène monomère - pourvu d'une charge dispersée, notamment minérale - notamment à base de baryte ou de carbonate de calcium -, de sorte que le panneau 1 réalise une isolation acoustique de type « masse-ressort ».

Selon la réalisation représentée, le procédé prévoit en outre de disposer une couche de revêtement 9, notamment à base de moquette, sur la couche supérieure 3, de manière à former un tapis de sol du véhicule.

On décrit à présent un panneau 1 réalisé par un tel procédé, ledit panneau comprenant :
- une couche inférieure 2 conformée à chaud pour former la couche de ressort d'un système d'isolation de type « masse-ressort »,
- et une couche supérieure 3 formant la masse dudit système « masse-ressort », ladite couche supérieure étant de nature étanche ou bien poreuse associée à une couche d'étanchéité 8 disposée entre lesdites couches supérieure et inférieure,
ledit panneau présentant en outre les caractéristiques suivantes :
- ladite couche inférieure est à base d'un mélange de flocons 4 de mousse élastiquement compressible, lesdits flocons étant notamment issus de recyclage,
- lesdits flocons constituent au minimum 80% en poids de ladite couche inférieure,
- lesdits flocons sont mélangés à des fibres liantes 5, lesdites fibres comprenant une âme 6, ladite âme étant non fusible ou fusible à température élevée, et une gaine 7 fusible à température modérée, lesdits flocons étant liés entre eux par fusion de ladite gaine formant liant, de sorte que ladite couche inférieure soit sous forme de mousse agglomérée.

Selon un mode de réalisation, la couche inférieure 2 peut présenter une épaisseur variable pouvant varier de 40 mm, en partie non comprimée, à 5 mm, en partie fortement comprimée.

En particulier, on peut prévoir de comprimer la couche inférieure 2, par exemple en périphérie du panneau 1 ou en fonction de contraintes d'encombrement autour dudit panneau dans le véhicule.

Selon un mode de réalisation, la couche inférieure 2 présente en partie non comprimée une densité inférieure à 0,025, et notamment inférieure à 0,020, une densité aussi faible pouvant être atteinte grâce à l'utilisation des fibres 5 bicomposant, et ceci sans nuire aux performances de ladite couche comme ressort.

Selon un mode de réalisation non revendiqué, la couche inférieure 2 peut être recouverte d'une couche de protection, non représentée, sur au moins une de ses faces, cette couche pouvant être de type « Spun » polyester de 20 à 30 g/m² ou non tissé. Une telle couche de protection peut notamment faciliter la conformation de la couche inférieure 2, notamment lors d'une étape de préchauffe, et aussi protéger ladite couche lors de la manipulation du panneau 1,

Selon un mode de réalisation, la couche inférieure 2 présente une masse surfacique inférieure à 1000 g/m², et notamment inférieure ou égale à 700 g/m², pour une épaisseur allant jusqu'à 40 mm, ce qui est bien moindre que les masses surfaciques usuellement connues pour des couches ressort.

Selon un mode de réalisation, les flocons 4 occupent entre 90 et 80% en poids de la couche inférieure 2, et notamment entre 87 et 83%, et notamment de l'ordre de 85% de sorte que les fibres 5 occupent entre 10 et 20% en poids de ladite couche, et notamment entre 13 et 17%, et notamment de l'ordre de 15%.

On décrit enfin un montage d'un tel panneau 1, ledit montage comprenant ledit panneau et une paroi 10 de structure de la caisse dudit véhicule, ledit panneau étant posé sur ladite paroi, la couche inférieure 2 étant tournée vers ladite paroi.

## Revendications

1. Procédé de réalisation d'un panneau (1) insonorisant de garnissage intérieur de véhicule automobile, ledit procédé comprenant les étapes suivantes :
• prévoir une couche inférieure (2) élastiquement compressible, ladite couche étant conformable à chaud de manière à pouvoir adopter une géométrie stable après conformation,
• chauffer ladite couche inférieure et la disposer dans un moule de manière à la conformer pour former couche de ressort d'un système d'isolation de type « masse-ressort »,
• lui associer une couche supérieure (3) formant la masse dudit système « masse-ressort », ladite couche supérieure étant de nature étanche ou bien poreuse associée à une couche d'étanchéité (8) disposée entre lesdites couches supérieure et inférieure,
• ladite couche inférieure est à base d'un mélange de flocons (4) de mousse élastiquement compressible, lesdits flocons étant notamment issus de recyclage,
• lesdits flocons sont mélangés à des fibres liantes (5), lesdites fibres comprenant une âme (6), ladite âme étant non fusible ou fusible à température élevée, et une gaine (7) fusible à température modérée, lesdits flocons étant liés entre eux par fusion de ladite gaine formant liant, de sorte que ladite couche inférieure soit sous forme de mousse agglomérée, ledit procédé étant **caractérisé en ce que** lesdits flocons constituent au minimum 80% en poids de ladite couche inférieure.

2. Procédé selon la revendication 1, **caractérisé en ce que** la couche inférieure (2) présente avant sa conformation dans le moule une densité inférieure à 0,025, et notamment inférieure à 0,020.

3. Procédé selon l'une des revendications 1 ou 2, **caractérisé en ce que** la couche inférieure (2) présente avant sa conformation dans le moule une épaisseur inférieure à 50 mm, et notamment de l'ordre de 40 mm.

4. Procédé selon l'une quelconque des revendications 1 à 3, **caractérisé en ce que** les flocons (4) occupent entre 90 et 80% en poids de la couche inférieure (2), et notamment entre 87 et 83%, et notamment de l'ordre de 85% de sorte que les fibres (5) occupent entre 10 et 20% en poids de ladite couche (2), et notamment entre 13 et 17%, et notamment de l'ordre de 15%.

5. Procédé selon l'une quelconque des revendications 1 à 4, **caractérisé en ce que** les flocons (4) de la couche inférieure (2) sont à base polyuréthanne.

6. Procédé selon l'une quelconque des revendications 1 à 5, **caractérisé en ce que** la couche supérieure (3) présente une masse surfacique minimale de 700 g/m².

7. Procédé selon l'une quelconque des revendications 1 à 6, **caractérisé en ce que** la couche supérieure (3) est poreuse et **en ce que** ledit procédé comprend en outre une étape de placement d'une couche d'étanchéité (8) entre ladite couche supérieure et la couche inférieure (2), ladite couche d'étanchéité étant notamment sous la forme d'un film thermoplastique ou d'un non tissé enduit étanche, notamment d'épaisseur inférieure à 200 microns, de sorte que le panneau (1) forme un système isolant, de type « masse-ressort », et absorbant de par la porosité de ladite couche supérieure.

8. Procédé selon l'une quelconque des revendications 1 à 6, **caractérisé en ce que** la couche supérieure (3) est étanche, étant notamment à base d'élastomère thermoplastique pourvu d'une charge dispersée, notamment minérale, de sorte que le panneau (1) réalise une isolation acoustique de type « masse-ressort ».

9. Panneau (1) réalisé par un procédé selon l'une quelconque des revendications 1 à 8, ledit panneau comprenant :
• une couche inférieure (2) conformée à chaud pour former la couche de ressort d'un système d'isolation de type « masse-ressort »,
• et une couche supérieure (3) formant la masse dudit système « masse-ressort », ladite couche supérieure étant de nature étanche ou bien poreuse associée à une couche d'étanchéité (8) disposée entre lesdites couches supérieure et inférieure,
• ladite couche inférieure est à base d'un mélange de flocons (4) de mousse élastiquement compressible, lesdits flocons étant notamment issus de recyclage,
• lesdits flocons sont mélangés à des fibres liantes (5), lesdites fibres comprenant une âme (6), ladite âme étant non fusible ou fusible à température élevée, et une gaine (7) fusible à température modérée, lesdits flocons étant liés entre eux par fusion de ladite gaine formant liant, de sorte que ladite couche inférieure soit sous forme de mousse agglomérée, ledit panneau étant **caractérisé en ce que** lesdits flocons constituent au minimum 80% en poids de ladite couche inférieure.

10. Montage d'un panneau (1) selon la revendication 9, ledit montage comprenant ledit panneau et une paroi (10) de structure de la caisse dudit véhicule, ledit panneau étant posé sur ladite paroi, la couche inférieure (2) étant tournée vers ladite paroi.

## Patentansprüche

1. Verfahren zur Herstellung eines schalldichten Innenverkleidungspaneels (1) für ein Kraftfahrzeug, wobei das Verfahren die folgenden Schritte umfasst:
• Vorsehen einer elastisch verdichtbaren Unterschicht (2), wobei die Schicht derart heißverformbar ist, um nach dem Verformen eine stabile Geometrie einnehmen zu können,
• Erhitzen der Unterschicht und Anordnen derselben in einer Form, um sie zu verformen, um die Federschicht eines Dämmungssystems in der Art "Masse-Feder" zu bilden,
• Zuweisen zur selben einer Oberschicht (3), die die Masse des "Masse-Feder"-Systems bildet, wobei die Oberschicht, die dicht oder porös ist, einer Abdichtungsschicht (8) zugewiesen wird, die zwischen der Ober- und Unterschicht angeordnet ist,
• die Unterschicht ist auf Grundlage eines Gemisches aus Flocken (4) aus elastisch verdichtbarem Schaumstoff, wobei die Flocken insbesondere aus der Wiederverwertung stammen,
• die Flocken werden Bindungsfasern (5) beigemengt, wobei die Fasern einen Kern (6) umfassen, wobei der Kern nicht schmelzbar oder bei hoher Temperatur schmelzbar ist, und eine Ummantelung (7), die bei gemäßigter Temperatur schmelzbar ist, wobei die Flocken durch Schmelzen der Ummantelung, die ein Bindemittel bildet, aneinander gebunden werden, sodass die Unterschicht in Form eines agglomerierten Schaumstoffes ist, wobei das Verfahren **dadurch gekennzeichnet ist, dass** die Flocken mindestens 80 Gew.-% der Unterschicht darstellen.

2. Verfahren nach Anspruch 1, **dadurch gekennzeichnet, dass** die Unterschicht (2) vor ihrer Verformung in der Form eine Dichte von weniger als 0,025, und insbesondere weniger als 0,020 aufweist.

3. Verfahren nach einem der Ansprüche 1 oder 2, **dadurch gekennzeichnet, dass** die Unterschicht (2) vor ihrer Verformung in der Form eine Dicke von weniger als 50 mm, und insbesondere in der Größenordnung von 40 mm aufweist.

4. Verfahren nach einem der Ansprüche 1 bis 3, **dadurch gekennzeichnet, dass** die Flocken (4) zwischen 90 und 80 Gew.-% der Unterschicht (2), und insbesondere zwischen 87 und 83 %, und insbesondere in der Größenordnung von 85 % einnehmen, sodass die Fasern (5) zwischen 10 und 20 Gew.-% der Schicht (2) und insbesondere zwischen 13 und 17 %, und insbesondere in der Größenordnung von 15 % einnehmen.

5. Verfahren nach einem der Ansprüche 1 bis 4, **dadurch gekennzeichnet, dass** die Flocken (4) der Unterschicht (2) auf Grundlage von Polyurethan sind.

6. Verfahren nach einem der Ansprüche 1 bis 5, **dadurch gekennzeichnet, dass** die Oberschicht (3) ein Mindestflächengewicht von 700 g/m² aufweist.

7. Verfahren nach einem der Ansprüche 1 bis 6, **dadurch gekennzeichnet, dass** die Oberschicht (3) porös ist, und dadurch, dass das Verfahren weiter einen Schritt des Platzierens einer Abdichtungsschicht (8) zwischen der Oberschicht und der Unterschicht (2) umfasst, wobei die Abdichtungsschicht insbesondere in der Form einer thermoplastischen Folie oder eines dichten beschichteten Filzes, insbesondere mit einer Dicke von weniger als 200 Mikrometern ist, sodass das Paneel (1) ein Dämmungssystem in der Art "Masse-Feder", und Absorptionssystem durch die Porosität der Oberschicht bildet.

8. Verfahren nach einem der Ansprüche 1 bis 6, **dadurch gekennzeichnet, dass** die Oberschicht (3) dicht ist, vor allem auf Grundlage eines thermoplastischen Elastomers ist, das mit einem dispergierten, insbesondere mineralischen Füllstoff versehen ist, sodass das Paneel (1) eine Schalldämmung in der Art "Masse-Feder" ausführt.

9. Paneel (1), das durch ein Verfahren nach einem der Ansprüche 1 bis 8 hergestellt wird, wobei das Paneel umfasst:
• eine Unterschicht (2), die heißverformt ist, um die Federschicht eines Dämmungssystems in der Art "Masse-Feder" zu bilden,
• und eine Oberschicht (3), die die Masse des "Masse-Feder"-Systems bildet, wobei die Oberschicht, die dicht oder aber porös ist, einer Abdichtungsschicht (8) zugewiesen ist, die zwischen der Ober- und Unterschicht angeordnet ist,
• die Unterschicht ist auf Grundlage eines Gemisches aus Flocken (4) aus elastisch verdichtbarem Schaumstoff, wobei die Flocken insbesondere aus der Wiederverwertung stammen,
• die Flocken werden Bindungsfasern (5) beigemengt, wobei die Fasern einen Kern (6) umfassen, wobei der Kern nicht schmelzbar oder bei hoher Temperatur schmelzbar ist, und eine Ummantelung (7), die bei gemäßigter Temperatur schmelzbar ist, wobei die Flocken durch Schmelzen der Ummantelung, die ein Bindemittel bildet, aneinander gebunden werden, sodass die Unterschicht in Form eines agglomerierten Schaumstoffes ist, wobei das Paneel **dadurch gekennzeichnet ist, dass** die Flocken mindestens 80 Gew.-% der Unterschicht darstellen.

10. Montage eines Paneels (1) nach Anspruch 9, wobei die Montage das Paneel und eine Strukturwand (10) der Karosserie des Fahrzeugs umfasst, wobei das Paneel an der Wand verbaut ist, wobei die Unterschicht (2) zur Wand gekehrt ist.

## Claims

1. Method for producing a soundproofing trim panel (1) for the interior of a motor vehicle, said method comprising the following steps:
- providing an elastically compressible lower layer (2), said layer being able to be shaped by heating in such a way as to be able to adopt a stable geometry after shaping,
- heating said lower layer and placing same in a mould such as to shape it to form a spring layer of a "spring-mass" type insulation system,
- associating same with an upper layer (3) forming the mass of said "spring-mass" system, said upper layer being of a sealed or porous nature and associated with a sealing layer (8) arranged between said upper and lower layers,
- said lower layer is made from a blend of elastically compressible foam flakes (4), said flakes being in particular from recycling,
- said flakes are mixed with binder fibres (5), said fibres comprising a core (6), said core that may or may not be fusible at a high temperature, and a sheath (7) that is fusible at a moderate temperature, said flakes being bonded to one another by means of the fusing of said sheath forming a binder, such that said lower layer takes the form of a bonded foam, said method being **characterised in that** said flakes form at least 80% by weight of said lower layer.

2. Method according to claim 1, **characterised in that** the lower layer (2) has before its shaping in the mould a density less than 0.025, and in particular less than 0.020.

3. Method according to one of claims 1 or 2, **characterised in that** the lower layer (2) has before its shaping in the mould a thickness less than 50 mm, and in particular of about 40 mm.

4. Method according to any of claims 1 to 3, **characterised in that** the flakes (4) occupy between 90 and 80% by weight of the lower layer (2), and in particular between 87 and 83%, and in particular of about 85% in such a way that the fibres (5) occupy between 10 and 20% by weight of said layer (2), and in particular between 13 and 17%, and in particular of about 15%.

5. Method according to any of claims 1 to 4, **characterised in that** the flakes (4) of the lower layer (2) have a polyurethane base.

6. Method according to any of claims 1 to 5, **characterised in that** the upper layer (3) has a minimum area density of 700 g/m².

7. Method according to any of claims 1 to 6, **characterised in that** the upper layer (3) is porous and **in that** said method further comprises a step of placing a sealing layer (8) between said upper layer and the lower layer (2), said sealing layer being in particular in the form of a thermoplastic film or of a sealed coated non-woven material, in particular with a thickness less than 200 microns, in such a way that the panel (1) forms an insulating system, of the "spring-mass" type, and absorbent through the porosity of said upper layer.

8. Method according to any of claims 1 to 6, **characterised in that** the upper layer (3) is sealed, being in particular with a thermoplastic elastomer base provided with a dispersed filler, in particular a mineral filler, in such a way that the panel (1) produces a sound insulation of the "spring-mass" type.

9. Panel (1) produced by a method according to any of claims 1 to 8, said panel comprising:
- a lower layer (2) shaped by heat in order to form the spring layer of an insulation system of the "spring-mass" type,
- and an upper layer (3) forming the mass of said "spring-mass" system, said upper layer being of a sealed or porous nature and associated with a sealing layer (8) arranged between said upper and lower layers,
- said lower layer is made from a blend of elastically compressible foam flakes (4), said flakes being in particular from recycling,
- said flakes are mixed with binder fibres (5), said fibres comprising a core (6), said core that may or may not be fusible at a high temperature, and a sheath (7) that is fusible at a moderate temperature, said flakes being bonded to one another by means of the fusing of said sheath forming a binder, such that said lower layer takes the form of a bonded foam, said panel being **characterised in that** said flakes form at least 80% by weight of said lower layer.

10. Mounting of a panel (1) according to claim 9, said mounting comprising said panel and a structural wall (10) of the body of said vehicle, said panel being placed on said wall, the lower layer (2) being turned towards said wall.
